# EUROPÄISCHE PATENTSCHRIFT

(11) **EP 0 810 022 B1**
(45) Veröffentlichungstag und Bekanntmachung des Hinweises auf die Patenterteilung: **23.08.2000**
(21) Anmeldenummer: 97107991.8
(22) Anmeldetag: 16.05.1997
(51) Int. Cl.: B01D 53/34, B01D 47/06, B01D 53/46, C22B 21/00

(54) **Verfahren und Vorrichtung zur Reinigung von aluminiumstaubhaltiger Abluft**
Apparatus and process for cleaning waste gas containing aluminium dust
Dispositif et procédé pour la purification des gaz chargés de poussières d'aluminium

(30) Priorität: 25.05.1996 DE 19621238
(43) Veröffentlichungstag der Anmeldung: 03.12.1997
(73) Patentinhaber: VAW aluminium AG, 53117 Bonn (DE)
(72) Erfinder: Güssgen, Olaf, 41542 Dormagen (DE); Corinth, Guido, 40211 Düsseldorf (DE)
(74) Vertreter: Müller-Wolff, Thomas, Dipl.-Ing.

(56) Entgegenhaltungen:
- EP-A- 0 177 998
- EP-A- 0 486 759
- EP-A- 0 576 416
- CN-A- 1 056 161
- DE-A- 2 126 235
- US-A- 3 989 488
- DATABASE WPI Week 8742 Derwent Publications Ltd., London, GB; AN 87-292245 XP002038442 SIGMUND: "Aluminium coating equipment -has alkali bath for capturing waste aluminium powder." & CS 8 601 400 A (SIGMUND J.) , 17.September 1987

## Beschreibung

Die Erfindung betrifft ein Verfahren zur Reinigung von aluminiumstaubhaltiger Abluft in einem Naßwäscher sowie eine Vorrichtung zur Durchführung des Verfahrens.

Derartige Vorrichtungen sind als sogenannte "Naßabscheider" in vielfältiger Form bekannt. Die dabei anfallenden Waschsuspensionen müssen gereinigt und entsorgt werden.

Wegen der sich laufend verschärfenden Umweltbestimmungen ist es sinnvoll, die Menge des nach der Reinigung anfallenden Feuchtschlammes möglichst gering zu halten. Außerdem sollte versucht werden, umweltgefährdende Bestandteile des Feuchtschlammes möglichst zu vermeiden oder in nicht schädliche, umweltfreundliche Reaktionsprodukte umzuwandeln.

Aus der EP 0 177 998 A1 ist ein Verfahren zur Entfernung von gasförmigen, festen und/oder flüssigen Partikeln aus gasförmigen Medien bekannt, wobei zwei Hilfsmedien verwendet werden. Das erste Hilfmedium besteht aus Partikeln der Größe von 50 - 5000 Mikrometer, wobei die Partikel als Flüssigkeit angegeben sind, in der die zu entfernenden Partikel gut löslich sein sollen. Die zu entfernenden Partikel können gasförmig, fest und/oder flüssig sein und es können auch noch weitere Hilfsmedien zur Entfernung eingesetzt werden. Als zweites Medium wird ein gasförmiges Medium mit einer Teilchengröße von 0 - 100 µm eingesetzt, wobei zwischen dem ersten und dem zweiten Hilfsmedium eine chemische oder physikalische Reaktion erfolgen soll. Als Beispiele sind für das erste Hilfsmedium Amoniakgas und für das zweite Medium Wasserdampf genannt. Dementsprechend besteht die Vorrichtung zur Durchführung des bekannten Verfahrens aus einem Behälter mit Zu- und Ableitungen für zwei Hilfsmedien, einer Sprüheinrichtung für das erste Hilfsmedium und einer Sprüheinrichtung für das zweite Hilfsmedium, einer Reaktionszone im Auftreffbereich der beiden Hilfsmedien und einem Tropfenabscheider. Das zweite Medium, z. B. Wasserdampf, soll eine chemische Affinität für das erste Medium, z. B. Amoniakgas, aufweisen, um die Schwerkraft-Abtrennung durch Bildung größerer Teilchen in der Auftreffzone zu ermöglichen.

Die Behandlung und Aufarbeitung von Medien mit erhöhtem Reaktionspotential ist nicht Gegenstand der EP 0 177 998.

In letzter Zeit müssen verstärkt die bei der Metallverarbeitung anfallenden Stäube abgesaugt und aus der Abluft später abgetrennt werden. Die hierbei verwendeten Naßwäscher sind zwar grundsätzlich für die Reinigung und Abtrennung von Aluminiumstaub einsetzbar, jedoch besetzt dabei die anfallende Aluminiumsuspension ein erhöhtes Reaktionspotential, so daß eine spätere chemische Reaktion mit plötzlicher Freisetzung von Wasserstoff nicht ausgeschlossen werden kann.

Aufgabe der vorliegenden Erfindung ist es daher, ein Verfahren zur Reinigung von staubhaltiger Abluft zu entwickeln, bei dem aluminiumstaubhaltige Abluft mit Waschflüssigkeit behandelt wird unter Vermeidung eines erhöhten Reaktionspotentials und bei minimalem Anfall von Feuchtschlamm.

Die Aufgabe wird erfindungsgemäß durch in den Ansprüchen angegebenen Merkmale gelöst. Es hat sich gezeigt, daß sich durch Zugabe einer natronhaltigen Waschflüssigkeit der im Abgas enthaltende Aluminiumstaub zu Natriumaluminat umsetzen läßt. Die Reaktion tritt spontan ein, wobei der sich bildende Wasserstoff über die Abluftanlage abgesaugt wird.

Mit dem Abluftdurchsatz wird gleichzeitig die bei der exothermen Reaktion auftretende Wärme aus dem Reaktionsraum abgeführt. Dies wird unterstützt durch die mit der Wärmetönung und dem hohen Abluftdurchsatz einhergehenden Verdunstungswärme.

Als ein wesentlicher Prozeßparameter wurde die Bereichsgrenze des pH-Wertes festgelegt. Zur Steuerung des pH-Wertes wird Natronlauge im Überschuß eingesetzt und ggf. nachdosiert. Bei pH-Werten über 11 wird ggf. Frischwasser zugesetzt, um die Verdunstungsverluste zu kompensieren.

Ein hoher Abluftdurchsatz ist auch erforderlich, um die Wasserstoffgas-Konzentration unterhalb von 4 Vol.-% im Abgas zu halten.

Im folgenden wird die Erfindung anhand eines Ausführungsbeispieles näher erläutert. Es zeigen:
- Figur 1: Gesamtdarstellung von der Absaugung bis zur Reinigung der staubhaltigen Abluft;
- Figur 2: Ausschnitt aus der Gesamtanlage;
- Figur 3: erfindungsgemäßer Aluminat-Wäscher.

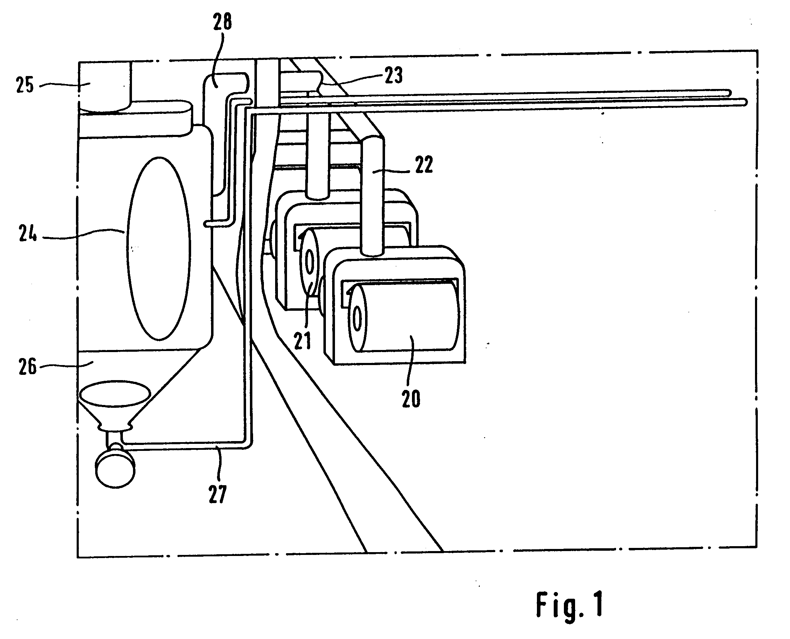

In Figur 1 wird die Abluft oberhalb der Bearbeitungszentren 20, 21 über ein Rohrsystem 22, 23 abgesaugt.

Die abgesaugte, mit Bürstenstaub und anderem Abrieb, ggf. auch Spänen beladende Luft gelangt in einen Staubwäscher 24, an dessen oberen Ende ein Reinluftkanal 25 und an dessen unteren Ende ein Auffangbecken 26 angeordnet ist. Die dabei entstehende Aluminatlösung wird über Leitung 27 aus der Anlage entfernt.

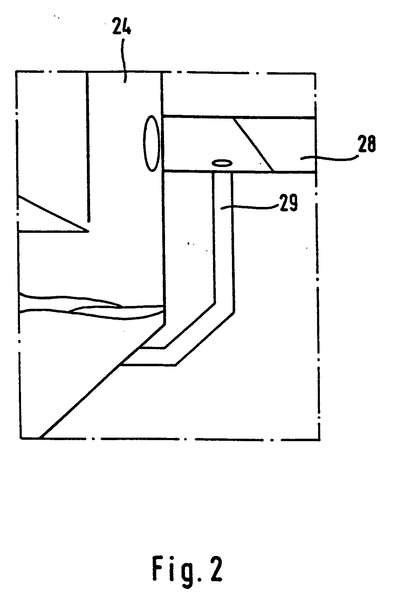

Figur 2 zeigt in vergrößerter Darstellung den Reaktionsbehälter 24 mit der Ablufteinleitung 28, die den mit Aluminiumstaub beladenen Rohgasteil von Leitung 23 in die Reaktionszone führt.

Vorher wird über Leitung 29 ca. 8 - 12 %ige Natronlauge in das Sammelrohr 28 eingedüst. Die Eindüsung erfolgt vorzugsweise in einem Venturi-Rohr, um eine möglichst günstige Verteilung der Spezialwaschlösung innerhalb des staubbeladenen Abgases zu erreichen.

Auf der kurzen Reaktionsstrecke erfolgt eine nahezu vollständige Umsetzung zu Natriumaluminat Na[Al(OH)₄], wodurch ein Schlammanfall vermieden wird. Die Reaktionstemperaturen werden durch Steuerung der Abluftmenge innerhalb vorgegebener Grenzen gehalten.

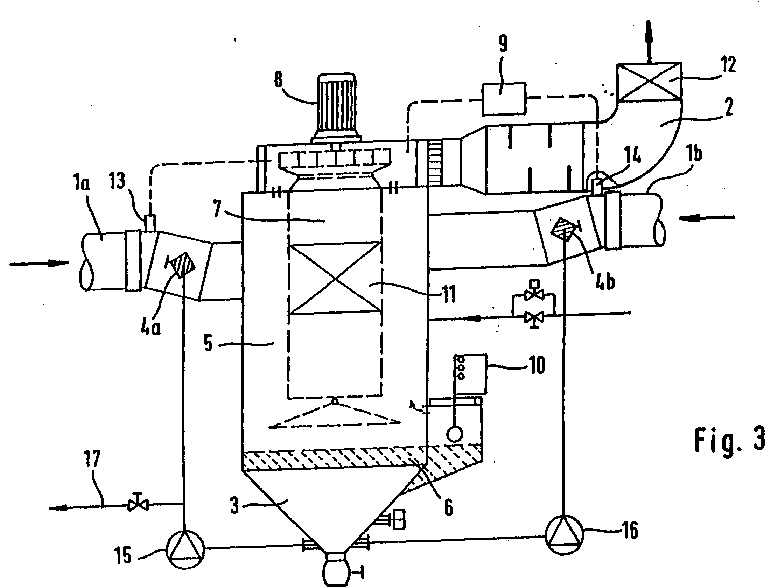

Das vollständige Regelsystem für die Steuerung der Temperatur und Konzentration im Reaktionsbereich ist in Figur 3 dargestellt. Die über die Abluftleitungen la, 1b in die Reaktionszone gelangenden Abluftmengen werden von Meßeinrichtungen 13, 14 erfaßt.

Dann gelangen die staubhaltigen Abgase in den Bereich von Sprücheinrichtungen 4a, 4b, die natronhaltige Lösungen mit dem Abgas in Kontakt bringen.

Innerhalb kürzester Zeit setzt sich Natronlauge mit dem Aluminiumstaub um, so daß im Reaktionsbehälter 5 Natrium-Aluminat gebildet wird.

Die teilweise in feiner Tröpfchenform anfallende Natrium-Aluminat-Lösung wird über Tröpfchenabscheider 11 aus dem Abgas entfernt und wieder dem Prozeßbecken 3 im unteren Abschnitt 6 des Reaktionsbehälters 5 zugeführt. Das Reingas verläßt am oberen Abschnitt 7 der Reaktionszone den Reaktionsbehälter 5, wobei die Durchsatzmenge über einen Ventilator 8 gesteuert werden kann.

Im unteren Teil 6 des Reaktionsbehälters befinden sich Meßeinrichtungen 10 für die Bestimmung des pH-Wertes. Durch Zugabe von frischer Natronlauge oder Wasser, lassen sich die Bereichsgrenzen für den pH-Wert genau einhalten.

Über die Umwälzpumpen 15, 16 wird ein Teil der natronlaugehaltigen Waschflüssigkeit zu den Sprüheinrichtungen 4a, 4b geleitet.

Hier ist es besonders vorteilhaft, wenn die nichtbenötigte Natriumaluminat-Lösung direkt zur Aufbereitung eingesetzt werden kann. Es ist jedoch auch möglich, aus der Natrium-Aluminat-Lösung durch Neutralisation Aluminiumhydroxid zu fällen und dieses der bekannten Verwendung zuzuführen.

Aus dem Vorstehenden ist ersichtlich, daß mit dem erfindungsgemäßen Verfahren die Reinigung von aluminiumstaubhaltigen Abgasen wesentlich verbessert werden kann. Während vorher ein Feuchtschlamm mit hohem Reaktionspotential entsorgt werden mußte, ist es nunmehr möglich, eine Aluminat-Lösung entweder im Kreislauf zu führen oder daraus Aluminiumhydroxid herzustellen. Das erfindungsgemäße Verfahren arbeitet nahezu schlammfrei ohne umweltgefährdende Reststoffe und ist verfahrenstechnisch mit einfachen Mitteln sicher beherrschbar.

## Patentansprüche

1. Verfahren zur Reinigung von aluminiumstaubhaltiger Abluft in einem Naßwäscher,
dadurch gekennzeichnet,
daß die alkalische Waschlösung im Abgaszuführkanal eines Abluftwäschers in die Abluft eingesprüht wird, wobei die Menge und Konzentration der eingesprühten Waschlösung ausreicht um die im Abgas vorhandene Aluminium-Staubmenge vollständig in Aluminat umzusetzen,
daß die aufgefangene Aluminatlösung durch Zugabe frischer Natronlauge oder Wasser auf einen pH-Wert von 11 bis 14 eingestellt und ein Teil als Waschflüssigkeit in die Abluft eingesprüht wird,
daß die Durchsatzmenge der Abluft über einen Ventilator gesteuert wird
und daß die Aluminatlösung entleert wird, auf einen pH-Wert von 6 bis 8 eingestellt und damit die Fällung von Aluminiumhydroxid eingeleitet wird.

2. Verfahren nach Anspruch 1,
dadurch gekennzeichnet,
daß die Wasserstoffgas-Konzentration unterhalb von 4 Vol.-% gehalten wird.

3. Verfahren nach einem der vorhergehenden Ansprüche,
dadurch gekennzeichnet,
daß 11%ige bis 13 %ige Natronlauge verwendet wird.

4. Verfahren nach einem der vorhergehenden Ansprüche,
dadurch gekennzeichnet,
daß die Temperatur im Reaktionsbereich von 60° bis 80° C gehalten wird.

5. Verfahren nach einem der vorhergehenden Ansprüche,
dadurch gekennzeichnet,
daß aus dem Aluminat durch Neutralisation Aluminiumhydroxid gefällt wird.

6. Vorrichtung zur Durchführung des Verfahrens zur Reinigung von aluminiumstaubhaltiger Abluft nach Anspruch 1 bis 5, bestehend aus:
einem mehrkammrigen Abluftwäscher mit einem oder mehreren Ablufteingängen und einem oder mehreren Abluftausgängen, wobei in dem oder den Ablufteingängen die Sprüheinrichtungen für alkalische Waschflüssigkeit angeordnet sind,
einem Auffangbecken für die Waschlösung im unteren Abschnitt des Abluftwäschers und einem Ventilator zur Absaugung des Reingases in dessen oberem Abschnitt durch den die Abluftdurchsatzmenge steuerbar ist,
Meß- und Regeleinrichtungen für die Steuerung des Ventilators,
Meß- und Regeleinrichtungen für die Einstellung des pH-Wertes der Waschlösung im Auffangbecken,
sowie Leitungen mit Umwälzpumpen vom Auffangbecken zu jeder Sprüheinrichtung.

7. Vorrichtung nach einem der vorhergehenden Ansprüche,
dadurch gekennzeichnet,
daß ein Tropfenabscheider (11) im oberen Abschnitt (7) des Reaktionsbehälters (5) angeordnet ist.

8. Vorrichtung nach einem der vorhergehenden Ansprüche,
dadurch gekennzeichnet,
daß ein Tropfenabscheider (12) im Abluftausgang (2) angeordnet ist.

## Claims

1. A process of cleaning, in a wet washer, exhaust air containing aluminium dust,
characterised in
that the alkaline washing solution is sprayed into the exhaust air in an exhaust gas feeding channel in an exhaust air washer, wherein the quantity and concentration of the sprayed-in washing solution is sufficient for fully converting the quantity of aluminium dust contained in the exhaust gas into aluminate,
that, by adding fresh sodium lye or water, the collected aluminate solution can be set to a pH value of 11 to 14 and that part of the washing solution is sprayed into the exhaust air,
that the through-put quantity of exhaust air is controlled by a ventilator,
and that the aluminate solution is discharged and set to a pH value of 6 to 8, as a result of which the precipitation of aluminium hydroxide is initiated.

2. A process according to claim 1,
characterised in
that the hydrogen gas concentration is kept below 4 % by volume.

3. A process according to any one of the preceding claims,
characterised in
that 11% to 13% sodium lye is used.

4. A process according to any one of the preceding claims,
characterised in
that the temperature is held in the reaction range of 60° to 80° C.

5. a process according to any one of the preceding claims,
characterised in
that by neutralisation, aluminium hydroxide is precipitated out of the aluminate.

6. An apparatus for carrying out the process of cleaning exhaust air containing aluminium dust according to claims 1 to 5, consisting of:
a multi-chamber exhaust air washer with one or several exhaust air inlets and one or several exhaust air outlets, with the spraying devices for an alkaline washing solution being arranged in the exhaust air inlet(s),
a collecting tank for the washing solution in the lower portion of the exhaust air washer and a ventilator for sucking off the cleaned gas in the upper portion of said washer, by means of which ventilator the throughput quantity of the exhaust air is controllable,
measuring and regulating devices for controlling the ventilator,
measuring and regulating devices for setting the pH value of the washing solution in the collecting tank,
and pipes with circulation pumps, leading from the collecting tank to each spraying device.

7. An apparatus according to any one of the preceding claims,
characterised in
that a drop separator (11) is arranged in the upper portion (7) of the reaction container (5).

8. A device according to any one of the preceding claims,
characterised in
that a drop separator (12) is arranged in the exhaust air outlet (2).

## Revendications

1. Procédé pour la purification d'air d'évacuation chargé de poussières d'aluminium dans un laveur humide, caractérisé en ce que
la solution de lavage alcaline est introduite par pulvérisation dans l'air d'évacuation dans le conduit d'alimentation des effluents gazeux d'un laveur d'air d'évacuation, la quantité et la concentration de la solution de lavage introduite par pulvérisation étant suffisantes pour convertir totalement en aluminate la quantité de poussières d'aluminium présentes dans l'effluent gazeux,
la solution d'aluminate recueillie est ajustée à un pH de 11 à 14 par ajout de soude caustique fraîche ou d'eau et une partie est introduite par pulvérisation dans l'air d'évacuation en tant que liquide de lavage,
le débit de l'air d'évacuation est commandé par l'intermédiaire d'un ventilateur,
et la solution d'aluminate est vidée, ajustée à un pH de 6 à 8 et la précipitation d'hydroxyde d'aluminium est ainsi enclenchée.

2. Procédé selon la revendication 1, caractérisé en ce que la concentration en gaz hydrogène est maintenue en dessous de 4% en volume.

3. Procédé selon l'une des revendications précédentes, caractérisé en ce que l'on utilise de la soude caustique à la concentration de 11% à 13%.

4. Procédé selon l'une des revendications précédentes, caractérisé en ce que la température dans la zone réactionnelle est maintenue entre 60° et 80°C.

5. Procédé selon l'une des revendications précédentes, caractérisé en ce que de l'hydroxyde d'aluminium est précipité par neutralisation à partir de l'aluminate.

6. Dispositif pour la réalisation du procédé de purification d'air d'évacuation contenant des poussières d'aluminium selon les revendications 1 à 5, comprenant :
un laveur d'air d'évacuation à plusieurs chambres avec une ou plusieurs entrées d'air d'évacuation et une ou plusieurs sorties d'air d'évacuation, dans lequel les dispositifs de pulvérisation du liquide de lavage alcalin sont disposés dans la ou les entrées d'air d'évacuation,
un bac collecteur pour la solution de lavage dans la partie inférieure du laveur d'air d'évacuation et, dans la partie supérieure de ce dernier, un ventilateur pour aspirer le gaz pur, par l'intermédiaire duquel le débit d'air d'évacuation peut être commandé,
des dispositifs de mesure et de régulation pour la commande du ventilateur,
des dispositifs de mesure et de régulation pour l'ajustement du pH de la solution de lavage dans le bac collecteur,
ainsi que des conduites avec des pompes de circulation allant du bac collecteur à chaque dispositif de pulvérisation.

7. Dispositif selon l'une des revendications précédentes, caractérisé en ce qu'un séparateur de gouttes (11) est disposé dans la partie supérieure (7) de la cuve de réaction (5).

8. Dispositif selon l'une des revendications précédentes, caractérisé en ce qu'un séparateur de gouttes (12) est disposé dans la sortie d'air d'évacuation (2).
